# EUROPÄISCHE PATENTSCHRIFT

(11) **EP 0 787 929 B1**
(45) Veröffentlichungstag und Bekanntmachung des Hinweises auf die Patenterteilung: **11.04.2001**
(21) Anmeldenummer: 97100289.4
(22) Anmeldetag: 10.01.1997
(51) Int. Cl.: F16H 57/04, F01M 5/00

(54) **Vorrichtung zur Temperierung des Getriebeöls eines Kraftfahrzeuges**
Device for temperature controlling of transmission oil of a motor vehicle
Dispositif pour tempérer la température de l'huile de transmission d'un véhicule automobile

(30) Priorität: 01.02.1996 DE 19603644
(43) Veröffentlichungstag der Anmeldung: 06.08.1997
(73) Patentinhaber: Bayerische Motoren Werke Aktiengesellschaft, 80788 München (DE); Modine Manufacturing Company, Racine, Wisconsin 53403-2552 (US)
(72) Erfinder: Huemer, Gerhart, 80333 München (DE); Lemberger, Heinz, 85774 Unterföhring (DE); Eckerskorn, Winfrid, 85521 Ottobrunn (DE); Absmeier, Christian, 85413 Hörgertshausen (DE); Temmesfeld, Axel, 83064 Raubling (DE); Brost, Victor, D-72631 Aichtal (DE); Schütterle, Karl, D-72141 Walddorfhäslach (DE); Kalbacher, Klaus, D-72414 Rangendingen (DE)
(74) Vertreter: Bücken, Helmut

(56) Entgegenhaltungen:
- EP-A- 0 736 703
- DE-A- 3 201 443
- DE-A- 3 403 435
- DE-A- 3 527 020
- US-A- 2 070 092

## Beschreibung

Die Erfindung betrifft eine Vorrichtung zur Temperierung des Getriebeöls eines Kraftfahrzeuges mit einer flüssigkeitsgekühlten Fahrzeug-Antriebsmaschine, deren in einem Kühler rückkühlbare Kühlflüssigkeit temperaturabhängig durch einen weiterhin vom Getriebeöl durchströmbaren Wärmetauscher geleitet wird, wobei der dem Wärmetauscher zugeführte Kühlflüssigkeitsstrom in einem durch die Temperatur des Getriebeöls gesteuerten Thermostatventil aus rückgekühlter sowie nicht rückgekühlter Kühlflüssigkeit mischbar ist.

Ist es an Kraftfahrzeugen erforderlich, das Öl eines im Fahrzeug-Antriebsstrang vorgesehenen Getriebes (Schaltgetriebes, Automatikgetriebes mit hydraulischem Drehmomentwandler, oder auch Achsgetriebes) zu kühlen, so ist hierfür üblicherweise ein Luft-ÖI-Wärmetauscher vorgesehen. Ferner ist es aus der DE 32 01 443 A1 bekannt, das Getriebeöl anschließend an einen Kaltstart des Fahrzeuges schneller zu erwärmen, indem das Öl durch einen ÖI -Kühlflüssigkeits-Wärmetauscher geführt wird, der weiterhin von der Kühlflüssigkeit der das Kraftfahrzeug antreibenden Brennkraftmaschine durchströmt wird. Da sich die Kühlflüssigkeit einer flüssigkeitsgekühlten Brennkraftmaschine im Anschluß an einen Kaltstart des Kraftfahrzeuges schneller erwärmt als Getriebeöl, kann somit das Getriebeöl schneller auf seine optimale Betriebstemperatur gebracht werden. Würde man nun diese beiden Systeme miteinander kombinieren, so daß einerseits das Getriebeöl schneller erwärmt werden kann und daß andererseits das Getriebeöl im Bedarfsfall rückgekühlt werden kann, so würde dies einen hohen Aufwand bedeuten, da nunmehr für das Getriebeöl zumindest zwei Wärmetauscher benötigt werden. Auch ist hierbei ein hoher Regelungsaufwand erforderlich, wenn eine gewünschte Öltemperatur erreicht bzw. eingeregelt werden soll.

Eine Vorrichtung nach dem Oberbegriff des Anspruchs 1, mit welcher das Getriebeöl erheblich besser als im soeben beschriebenen Stand der Technik temperierbar ist, ist aus der US 2,070,092 bekannt. Hier genügt ein einziger Wärmetauscher für das Getriebeöl, um dieses bedarfsabhängig zu temperieren, d. h. anschließend an einen Kaltstart schneller zu erwärmen und später rückzukühlen, wobei über diesen Wärmetauscher andererseits die Kühlflüssigkeit der Brennkraftmaschine geleitet wird und zwar mit einer einregelbaren Temperatur. Aus diesem Grunde ist ein Thermostatventil vorgesehen, welches die Temperatur des den Wärmetauscher durchströmenden Kühlflüssigkeitsstromes einstellt. Diese Temperatureinstellung erfolgt dabei durch gezielte Mischung von rückgekühlter sowie nicht rückgekühlter Kühlflüssigkeit der Brennkraftmaschine. Wie bereits oben angegeben und ferner im Oberbegriff des Patentanspruches 1 aufgeführt, steht nämlich Kühlflüssigkeit mit unterschiedlicher Eigentemperatur zur Verfügung. Zum einen kann auf das aus der Brennkraftmaschine abgeführte Kühlmittel zugegriffen werden, welches relativ warm ist, zum anderen kann das im Fahrzeug-Kühler rückgekühlte Kühlmittel verwendet werden, welches eine demgegenüber niedrigere Temperatur besitzt. Durch geeignete Mischung dieser beiden Kühlmittelmengen, d.h. durch geeignete Mischung von rückgekühlter sowie nicht rückgekühlter Kühlflüssigkeit läßt sich nun im Kühlflüssigkeits-Getriebeöl-Wärmetauscher eine gewünschte Kühlflüssigkeits-Temperatur einstellen, welche eine gewünschte Getriebeöl-Temperierung ermöglicht.

In der US 2,070 092 ist vorgesehen, daß das Thermostatventil zur Mischung von rückgekühlter sowie nicht rückgekühlter Kühlflüssigkeit durch die Temperatur des Getriebeöles gesteuert wird. Dies gewährleistet eine schnelle Regelung, da die Temperatur des das Getriebeöl temperierenden Mediums, nämlich die Temperatur der Kühlflüssigkeit in Abhängigkeit vom Temperierungs-Ergebnis, nämlich von der Temperatur des Getriebeöles eingestellt wird.
Demgegenüber sind jedoch weitere Verbesserungen möglich, die aufzuzeigen sich die vorliegende Erfindung zur Aufgabe gestellt hat.
Zur Lösung dieser Aufgabe ist vorgesehen, daß das Thermostatventil zusätzlich durch die Temperatur des im wesentlichen gemischten Kühlflüssigkeitsstromes gesteuert wird. Vorteilhafte Weiterbildungen sind Inhalt der Unteransprüche.

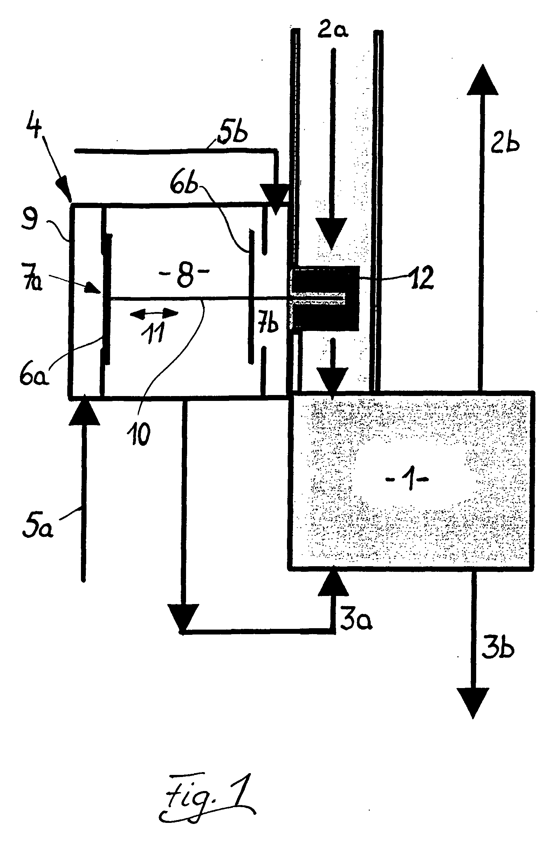

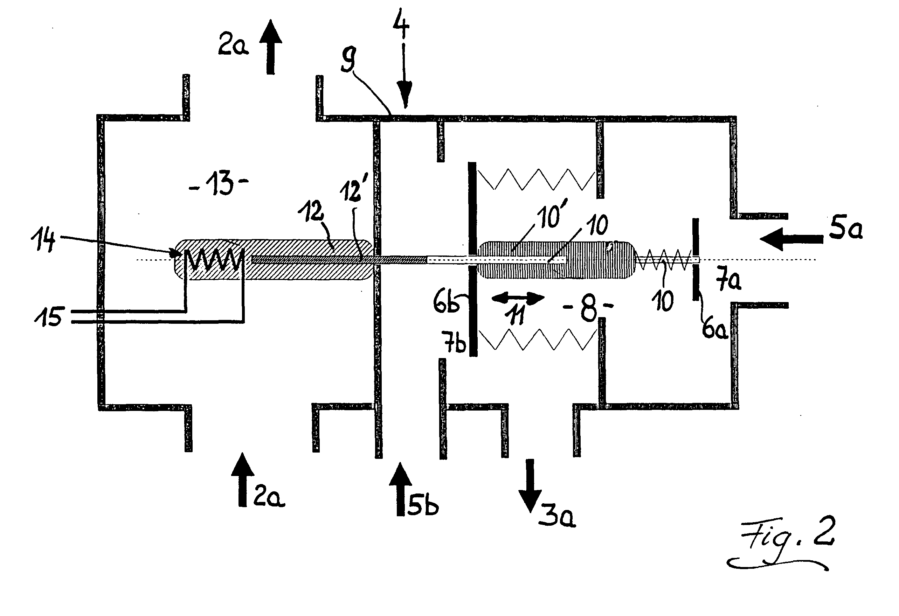

Zur näheren Erläuterung der Erfindung wird im folgenden anhand von Prinzipskizzen in Fig. 1 der bekannte Stand der Technik beschrieben, während in Fig. 2 ein bevorzugtes Ausführungsbeispiel der Erfindung lediglich prinzipiell dargestellt ist.

Mit der Bezugsziffer 1 ist ein Flüssigkeits-Flüssigkeits-Wärmetauscher bezeichnet, durch den einerseits das zu temperierende Getriebeöl eines Kraftfahrzeuges und andererseits ein Kühlflüssigkeitsstrom der das Fahrzeug antreibenden Brennkraftmaschine leitbar ist. Demgemäß ist eine Zuleitung 2a sowie eine Ableitung 2b für das Getriebeöl und ferner eine Zuleitung 3a sowie eine Ableitung 3b für die Kühlflüssigkeit vorgesehen. Dabei ist der durch die Zuleitung 3a zugeführte Kühlflüssigkeitsstrom in einem Thermostatventil 4 aus zwei eine verschiedene Temperatur aufweisenden Kühlflüssigkeitsströmen mischbar.

Zum einen gelangt in das Thermostatventil 4 nicht rückgekühlte Kühlflüssigkeit 5a direkt von der Brennkraftmaschine, zum anderen rückgekühlte Kühlflüssigkeit 5b, die zuvor einen Kühler (Fahrzeug-Kühler) durchströmt hatte, in welchem - wie dem Fachmann bekannt - das Kühlmittel der Brennkraftmaschine rückgekühlt werden kann. Im Thermostatventil 4 kann nunmehr Kühlflüssigkeit 5a mit Kühlflüssigkeit 5b in beliebigen Anteilen gemischt werden, wodurch die Temperatur des über die Zuleitung 3a in den Wärmetauscher 1 gelangenden Kühlflüssigkeitsstromes gezielt eingestellt werden kann, um dann über den Wärmetauschprozeß im Wärmetauscher 1 eine gezielte Getriebeöl-Temperatur in der Ableitung 2b zu erzielen.

An dieser Stelle soll ausdrücklich darauf hingewiesen werden, daß unter einer Mischung von rückgekühlter Kühlflüssigkeit 5b sowie nicht rückgekühlter Kühlflüssigkeit 5a zur Erzielung einer gewünschten Temperatur in der Kühlflüssigkeits-Zuleitung 3a auch derjenige Zustand verstanden werden soll, bei dem lediglich rückgekühlte Kühlflüssigkeit 5b oder lediglich nicht rückgekühlte Kühlflüssigkeit 5a durch das Thermostatventil 4 hindurch in die Zuleitung 3a gelangt. Im übrigen ist dieses Thermostatventil 4 wie ein üblicher Mischthermostat aufgebaut, d.h. es sind zwei Ventilteller 6a, 6b vorgesehen, die den Zuströmquerschnitten 7a, 7b für Kühlflüssigkeit 5a bzw. 5b zu einer Mischkammer 8 im Inneren des Thermostatgehäuses 9 zugeordnet sind.

Positioniert werden die auf einer gemeinsamen Kolbenstange 10 befestigten Ventilteller 6a, 6b durch einen die Kolbenstange 10 gemäß Pfeilrichtung 11 verschiebenden und als Dehnstoffelement ausgebildeten Steuerkolben 12. Dieser Steuerkolben 12 ist bei der Darstellung nach Fig. 1 in der Zuleitung 2a angeordnet und wird somit vom noch nicht temperierten Getriebeöl beaufschlagt. Dies bedeutet, daß das Thermostatventil 4 durch die Temperatur des Getriebeöls gesteuert wird.

Wesenlich günstiger ist es jedoch, wenn eine Steuerung sowohl in Abhängigkeit von der Temperatur des Getriebeöles als auch in Abhängigkeit von der aktuellen Kühlflüssigkeitstemperatur möglich ist. Ein bevorzugtes Ausführungsbeispiel hierfür ist in Fig. 2 gezeigt, wobei hier lediglich das Thermostatventil 4 prinzipiell dargestellt ist. Gleiche Teile wie bei Fig. 1 sind mit gleichen Bezugsziffern bezeichnet. So findet sich auch hier wieder die innerhalb des Thermostatgehäuses 9 vorgesehene Mischkammer 8 mit den Ventiltellern 6a, 6b, die die Zuströmquerschnitte 7a, 7b begrenzen, wobei von der Mischkammer eine Kühlflüssigkeits-Zuleitung 3a zum hier nicht gezeigten Wärmetauscher (1) führt. Auch hier sind die beiden Ventilteller 6a, 6b auf einer Kolbenstange 10 angeordnet, die hier jedoch nicht direkt mit einem vom Getriebeöl beaufschlagten Steuerkolben in Verbindung steht. Vielmehr ist bei diesem Ausführungsbeispiel nach Fig. 2 die Kolbenstange 10 Bestandteil eines in der Mischkammer 8 vorgesehenen sog. Mischkammer-Steuerkolbens 10', der abermals als Dehnstoffelement ausgebildet ist. Dies bedeutet, daß die Ventilteller 6a, 6b in Abhängigkeit von der Temperatur der Kühlflüssigkeit in der Mischkammer 8 gemäß Pfeilrichtung 11 verschoben werden können.

Jedoch ist auch hier in Fig. 2 ein vom Getriebeöl beaufschlagter, als Dehnstoffelement ausgebildeter Steuerkolben 12 vorgesehen. Dieser ist in einem sog. Ölraum 13 des Thermostatventiles 4, der in die Getriebeöl-Zuleitung 2a integriert ist, angeordnet, und wird daher als sog. Ölraum-Steuerkolben 12 bezeichnet. Diesem Ölraum-Steuerkolben 12 ist eine eigene Kolbenstange 12' zugeordnet, auf deren freien Ende sich die Kolbenstange 10 des Mischkammer-Steuerkolbens 10' abstützt. Auf diese Weise können mit einer geeigneten Formänderung des Ölraum-Steuerkolbens 12 ebenfalls die beiden Ventilteller 6a, 6b gemäß Pfeilrichtung 11 verschoben werden, was eine Veränderung der freien Zuströmquerschnitte 7a, 7b zur Folge hat und somit die Temperatur des in der Mischkammer 8 befindlichen Kühlflüssigkeitsstromes beeinflußt.

In Fig. 2 befinden sich die beiden Ventilteller 6a, 6b in der Mischkammer 8 in etwa in ihrer Mittelstellung. Den Wärmetauscher 1 gemäß Fig. 1 durchströmt somit ein Kühlflüssigkeitsstrom von in etwa mittlerer Temperatur, so daß im Wärmetauscher 1 das ebenfalls hindurchgeführte Getriebeöl eine geringfügige Abkühlung erfährt. Erhöht sich nun aufgrund irgendwelcher Belastungen die Temperatur des Getriebeöles, so bewirkt dies eine Ausdehnung des Ölraum-Steuerkolbens 12, wodurch dessen Kolbenstange 12' und somit auch die Kolbenstange 10 ausgehend von der gezeigten Position nach rechts verschoben wird. Der Zuströmquerschnitt 7a für nicht rückgekühlte Kühlflüssigkeit 5a wird hierdurch verschlossen, so daß ein größerer Anteil von rückgekühlter Kühlflüssigkeit 5b über den Zuströmquerschnitt 7b in die Mischkammer 8 und von hier aus über die Kühlflüssigkeits-Zuleitung 3a in den Wärmetauscher 1 gelangen kann. Dies hat zur Folge, daß im Wärmetauscher 1 das Getriebeöl verstärkt rückgekühlt wird. Nimmt hierdurch schließlich die Temperatur des Getriebeöles wieder ab, so verändert der Ölraum-Steuerkolben 12 seine Gestalt dementsprechend, daß die Kolbenstange 12' sowie die Kolbenstange 10 wieder nach links verschoben werden und vermehrt nicht rückgekühlte Kühlflüssigkeit 5a über die Kühlflüssigkeits-Zuleitung 3a in den Wärmetauscher 1 gelangen kann.

Zusätzlich zu der eben beschriebenen Funktion der Kühlflüssigkeitsstrom-Temperatursteuerung in Abhängigkeit von der Temperatur des Getriebeöles erlaubt das Thermostatventil 4 eine Steuerung in Abhängigkeit von der Kühlflüssigkeitstemperatur selbst. So nimmt direkt im Anschluß an einen Kaltstart der Brennkraftmaschine, wenn die Kühlflüssigkeit noch kalt ist, die Kolbenstange 10 durch eine entsprechende Gestalt des Mischkammer-Steuerkolbens 10' eine derartige Position ein, daß der Zuströmquerschnitt 7b verschlossen und der Zuströmquerschnitt 7a vollständig geöffnet ist. Ausgehend von der in Fig. 2 gezeigten Position sind die Ventilteller 6a, 6b somit nach links verschoben worden. Ist andererseits die Kühlflüssigkeit beispielsweise durch eine extreme Belastung der Brennkraftmaschine derart heiß, daß das Getriebeöl im Wärmetauscher 1 unnötigerweise bzw. unzulässig hoch erwärmt werden würde, so wird dann unter Einfluß des Mischkammer-Steuerkolbens 10 der Zuströmquerschnitt 7a für nicht rückgekühlte Kühlflüssigkeit verschlossen und der Zuströmquerschnitt 7b für rückgekühlte Kühlflüssigkeit 5b vollständig geöffnet. Dann wäre die Kolbenstange 10 mit den beiden Ventiltellern 6a, 6b ausgehend von der gezeigten Position an ihren rechten Anschlag verschoben worden. Durch geeignete Abstimmung ist es mit dem beschriebenen Thermostatventil 4 somit möglich, unter allen möglichen Betriebszuständen die jeweils gewünschte Kühlflüssigkeits-Temperatur im Wärmetauscher 1 einzustellen um eine jeweils gewünschte Getriebeöl-Temperatur zu erzielen.

Im Sinne einer besonders vorteilhaften Weiterbildung der Erfindung ist zumindest einer der beiden Steuerkolben 10', 12, und zwar hier der Ölraum-Steuerkolben 12 bzw. das zugehörige Dehnstoffelement elektrisch beheizbar. Hierzu ist im Steuerkolben 12 ein Heizelement 14 vorgesehen, das unter Ansteuerung einer nicht gezeigten elektronischen Steuereinheit mit einer elektrischen Spannungsversorgung 15 verbindbar ist. Hierdurch ist quasi eine Temperatur-Vorsteuerung möglich, wie sie im übrigen in der Patentschrift EP-A-736 703 beschrieben ist. Wird beispielsweise aufgrund irgendwelcher Randbedingungen erkannt, daß binnen einer kurzen Zeitspanne mit einer deutlichen Steigerung der Getriebeöltemperatur gerechnet werden muß, so kann der Ölraum-Steuerkolben 12 bzw. das zugehörige Dehnstoffelement bereits prophylaktisch beheizt werden, wodurch er sich ausdehnt, seine Kolbenstange 12' und somit auch die beiden Ventilteller 6a, 6b nach rechts verschiebt, so daß der Zuströmquerschnitt 7a für nicht rückgekühlte Kühlflüssigkeit 5a verschlossen wird. Noch bevor das Getriebeöl tatsächlich höhere Temperaturen angenommen hat, erfolgt dann aufgrund des hohen Anteils von rückgekühlter Kühlflüssigkeit 5b im Wärmetauscher 1 eine verstärkte Rückkühlung dieses Getriebeöles, so daß unerwünschte Temperatur-Überschwinger vermieden werden können. Mit der elektrischen Beheizung zumindest eines der beiden Steuerkolben 10' oder 12 ist es somit möglich, die Getriebeöl-Temperatur nicht nur im Sinne einer Vorsteuerung, sondern generell auf einen gewünschten Temperaturwert einzustellen. Dabei können durchaus eine Vielzahl von Details insbesondere konstruktiver Art abweichend vom gezeigten Ausführungsbeispiel gestaltet sein, ohne den Inhalt der Patentansprüche zu verlassen.

## Patentansprüche

1. Vorrichtung zur Temperierung des Getriebeöls eines Kraftfahrzeuges mit einer flüssigkeitsgekühlten Fahrzeug-Antriebsmaschine, deren in einem Kühler rückkühlbare Kühlflüssigkeit temperaturabhängig durch einen weiterhin vom Getriebeöl durchströmbaren Wärmetauscher (1) geleitet wird, wobei der dem Wärmetauscher (1) zugeführte Kühlflüssigkeitsstrom in einem durch die Temperatur des Getriebeöls gesteuerten Thermostatventil (4) aus rückgekühlter (5b) sowie nicht rückgekühlter (5a) Kühlflüssigkeit mischbar ist,
dadurch gekennzeichnet, daß das Thermostatventil (4) zusätzlich durch die Temperatur des im wesentlichen gemischten Kühlflüssigkeitsstromes gesteuert wird.

2. Vorrichtung nach Anspruch 1,
dadurch gekennzeichnet, daß das Thermostatventil (4) zumindest einen als Dehnstoffelement ausgebildeten Steuerkolben (12, 10') aufweist, der Ventilteller (6a, 6b) zum Verändern der Zuströmquerschnitte (7a, 7b) zu einer Mischkammer (8) im Thermostatgehäuse (9) trägt.

3. Vorrichtung nach Anspruch 2,
dadurch gekennzeichnet, daß sowohl in der Mischkammer (8) als auch in einem vom Getriebeöl durchströmten Ölraum (13) des Thermostatgehäuses (9) je ein Steuerkolben (12, 10') vorgesehen ist, wobei sich der Mischkammer-Steuerkolben (10') am Ölraum-Steuerkolben (12) abstützt.

4. Vorrichtung nach Anspruch 2 oder 3,
dadurch gekennzeichnet, daß zumindest ein Steuerkolben (12, 10') elektrisch beheizbar ist.

## Claims

1. A device for controlling the temperature of the gear oil in a motor vehicle having a liquid-cooled engine cooled by liquid re-cooled in a radiator and conveyed in dependence on temperature through a heat exchanger (1) through which gear oil also flows, the stream of cooling liquid conveyed through the heat exchanger (1) being made up of re-cooled (5b) and not re-cooled (5a) cooling liquid mixed in a thermostat valve (4) controlled by the temperature of the gear oil, characterised in that the thermostat valve (4) is additionally controlled by the temperature of the substantially mixed stream of cooling liquid.

2. A device according to claim 1,
characterised in that the thermostat valve (4) has at least one control piston (12, 10') in the form of an expansion-material element and bearing valve discs (6a, 6b) for varying the flow cross-section (7a, 7b) into a mixing chamber (8) in the thermostat casing (9).

3. A device according to claim 2,
characterised in that respective control pistons (12, 10') are provided in the mixing chamber (8) and in an oil chamber (13) of the thermostat casing (9) through which gear oil flows, the mixing-chamber control piston (10') abutting the oil-chamber control piston (12).

4. A device according to claim 2 or 3,
characterised in that at least one control piston (12, 10') is electrically heatable.

## Revendications

1. Dispositif pour mettre en température l'huile de la transmission d'un véhicule automobile équipé d'un moteur à refroidissement par liquide, comportant un radiateur recevant du liquide de refroidissement, susceptible d'être refroidi, en fonction de la température par un échangeur de chaleur également traversé par l'huile de la transmission, le flux de liquide de refroidissement alimentant l'échangeur de chaleur (1) étant mélangé dans une soupape thermostatique (4) commandée par la température de l'huile de la transmission, à un liquide de refroidissement refroidi (5b) et non refroidi (5a),
caractérisé en ce que
la soupape thermostatique (4) est commandée en plus par la température du flux de liquide de refroidissement essentiellement mélangé.

2. Dispositif selon la revendication 1,
caractérisé en ce que
la soupape thermostatique (4) comporte au moins un piston de commande (12, 10') réalisé sous la forme d'un élément dilatable, qui porte des plateaux de soupape (6a, 6b) pour modifier les sections de passage (7a, 7b) vers une chambre de mélange (8) dans un boîtier thermostatique (9).

3. Dispositif selon la revendication 2,
caractérisé en ce qu'
à la fois dans la chambre de mélange (8) et dans une chambre à huile (13) traversée par l'huile de la transmission dans le boîtier thermostatique (9), il est prévu chaque fois un piston de commande (12, 10'), et le piston de commande (10') de la chambre de mélange s'appuie contre le piston de commande (12) de la chambre à huile.

4. Dispositif selon la revendication 2 ou 3,
caractérisé en ce qu'
au moins un piston de commande (12, 10') peut être chauffé électriquement.
